# EUROPEAN PATENT SPECIFICATION

(11) **EP 2 939 542 B1**
(45) Date of publication and mention of the grant of the patent: **25.07.2018**
(21) Application number: 13867023.7
(22) Date of filing: 26.12.2013
(51) Int. Cl.: A21D 2/26, A21D 2/18, A21D 2/36, A21D 13/02

(54) **BAKED CONFECTIONERY**
FEINGEBÄCK
CONFISERIE CUITE AU FOUR

(30) Priority: 28.12.2012 JP 2012287291
(43) Date of publication of application: 04.11.2015
(73) Proprietor: Kao Corporation, Chuo-Ku Tokyo 103-8210 (JP)
(72) Inventor: SATO, Mioto, Tokyo 131-8501 (JP); AOYAMA, Hiroshi, Tokyo 103-8210 (JP)
(74) Representative: Hoffmann Eitle
(86) International application number: PCT/JP2013/084994
(87) International publication number: WO 2014/104250

(56) References cited:
- EP-A2- 2 255 663
- WO-A1-2010/049792
- WO-A2-2012/076911
- DE-U1-202011 107 231
- JP-A- S 633 749
- JP-A- H1 175 746
- JP-A- 2002 000 171
- JP-A- 2002 191 292
- JP-A- 2004 298 179
- US-A1- 2004 047 962
- US-A1- 2009 053 379
- DATABASE GNPD [Online] MINTEL; 4 December 2012 (2012-12-04), Anonymous: "Low carb buns", XP002759016, retrieved from www.gnpd.com Database accession no. 1941966
- ANONYMOUS ED - ANONYMOUS: "Was ist Eiweiss-Abendbrot?", INTERNET CITATION, 1 August 2011 (2011-08-01), pages 1-3, XP002679085, Retrieved from the Internet: URL:http://www.wir-baecker.de/index.php/to pic,4374.msg58877.html#msg58877 [retrieved on 2012-07-03]

## Description

### Field of the Invention

The present invention relates to baked confectionery.

### Background of the Invention

Wheat hull, also called wheat bran, is attracting attention as a material of health food, since it is rich in insoluble dietary fiber, vitamins, minerals and the like. Whole wheat flour obtained by milling whole wheat grains including their hulls is reported to have a hypotensive effect and an abdominal fat reducing effect, and also reported to reduce risk of mortality of diabetic patients.

In addition, protein is a nutrient required for producing blood, muscle, various enzymes and so forth, and is classified as one of the three major nutrients together with carbohydrate and fat.

Thus, the physiological function and nutritional balance of food can be improved by increasing the content of the insoluble dietary fiber and/or increasing the protein content of the food.

Patent Literature 1 describes an invention of producing a protein-rich and fiber-rich baked food which contains at least about 4 g of protein and 4 g of fiber per 30 g unit. Patent Literature 1 teaches a technique for producing a cracker rich in soybean protein, pea protein, wheat protein or milk protein, and digestion-resistant starch or oat fiber, through a specific production process, to thereby obtain a crispy cracker having texture that is not hard.

Patent Literature 1: JP-A-2010-279352 ("JP-A" means unexamined published Japanese patent application).

US2004/0047962 discloses highly nutritious baked products with an improved level of hardness having a high protein content and a low fat content. The product has to contain trehalose. A high fiber content is preferred.

### Summary of the Invention

The present invention provides baked confectionery, containing:
insoluble dietary fiber in an amount of from 4.0 to 12.0 mass%;
protein in an amount of from 12.0 to 30.0 mass%; and
lipid in an amount of from 10.0 to 15.0 mass%;
wherein the insoluble dietary fiber includes wheat-bran-derived insoluble dietary fiber, wherein a ration of the wheat-bran-derived insoluble dietary fiber in the insoluble dietary fiber is 30.0 mass% or more. Further, the present invention provides a method of producing the baked confectionery described above, including preparing dough by blending therein at least wheat flour, wheat bran, protein-containing powder, and fat and oil, and then baking the dough.

In this specification, when the term "insoluble dietary fiber" is simply used to indicate an ingredient in the baked confectionery, the term means all of the insoluble dietary fiber contained in the baked confectionery.

Other and further objects, features and advantages of the invention will appear more fully from the following description.

### Detailed Description of the Invention

The present invention is contemplated for providing baked confectionery increased in the blended amounts of both insoluble dietary fiber and protein, in which the baked confectionery causes little dry feeling in the mouth and has a moist food texture even though it is rich in insoluble dietary fiber, and the baked confectionery has a softer food texture due to having the dough being loosely packed and can be easily bitten off even though it is rich in protein.

In baked confectionery made using farina as a main ingredient, such as cookies, biscuits and low-calorie snack bars, moist and easy-to-eat ones, namely, ones that are easily bitten off and do not cause a dry feeling in the mouth during chewing, are generally favored.

The present inventors pursued a study on baked confectionery in which wheat bran is blended in order to improve a physiological function of the baked confectionery, and the protein content is increased in order to improve a nutritional balance. As a result, the present inventors found that baked confectionery reduced in dry feeling caused by saliva absorption, and thus being moist and easy-to-eat, and also having low dough agglomeration, and thus offering a softer food texture easily bite off, can be obtained by adjusting the content of the insoluble dietary fiber including the wheat bran and the protein content to specific ranges, in the baked confectionery containing a specific amount of lipid. Furthermore, the present inventors found that the so-obtained baked confectionery resists crumbling and is excellent in dough shape stability (quality stability).

The present invention has been completed based on these findings.

In the present invention, "baked confectionery" means a biscuit, a cookie, a cracker, a hardtack, a pretzel, a pie, cut bread, shortbread, or the like as described in "Seikajiten (Confectionery Dictionary)," the first edition, October 30, 1981, p.204. The baked confectionery preferably includes a biscuit, a cookie, a hardtack, a pretzel, a pie, cut bread, and the like specified in the Fair Competition Code in 1971.

More specifically, "baked confectionery" in the present invention means a product that is different from bread prepared by baking dough after many gas bubbles are incorporated therein by fermenting the dough with yeast, and also different from cake prepared by baking dough after many gas bubbles are incorporated therein by adding baking powder, meringue or the like to the dough. "Baked confectionery" of the present invention contains a smaller amount of gas bubbles, and has lower elasticity, higher penetration strength, a lower moisture content, and also lower water activity in comparison with the bread and the cake.

The baked confectionery of the present invention contains a specific amount of lipid, and the content of the insoluble dietary fiber and the protein content in the baked confectionery are increased to specific levels. The baked confectionery of the present invention is described in detail below.

The baked confectionery of the present invention contains wheat-bran-derived insoluble dietary fiber. The baked confectionery of the present invention may further contain, in addition to the wheat-bran-derived insoluble dietary fiber, one kind or two or more kinds of insoluble dietary fiber other than the wheat-bran-derived insoluble dietary fiber.

Here, "dietary fiber" means a whole of hardly-digestible ingredients in food, the ingredients being not digested by a human digestive enzyme. Among them, one that is hard to be dissolved into water is called the insoluble dietary fiber. The insoluble dietary fiber is not particularly limited, and may be derived from cereal, legumes, fruits, green goods or the like, such as cellulose and hemicellulose, or may be derived from shells of crustacea, such as chitin and chitosan, or may be derived from cell walls of fungi.

From viewpoints of shape stability, the packing degree of dough, moist food texture, and the shape stability, a ratio of the wheat-bran-derived insoluble dietary fiber in the insoluble dietary fiber present in the baked confectionery of the present invention is 30.0 mass% or more, preferably 40.0 mass% or more, more preferably 45.0 mass% or more. Moreover, the insoluble dietary fiber derived from blended wheat flour or the like is also ordinarily contained in the baked confectionery, and therefore the ratio of the wheat-bran-derived insoluble dietary fiber in the insoluble dietary fiber present in the baked confectionery is ordinarily 95.0 mass% or less, and may be 90.0 mass% or less, or 80.0 mass% or less.

A content of the insoluble dietary fiber in the wheat bran is ordinarily from about 40 mass% to about 50 mass%.

The content of the insoluble dietary fiber in the baked confectionery of the present invention is from 4.0 to 12.0 mass%. From viewpoints of the shape stability and the packing degree of dough, the content of the insoluble dietary fiber in the baked confectionery of the present invention is preferably 4.5 mass% or more, more preferably 5.0 mass% or more, more preferably 5.5 mass% or more, more preferably 6.0 mass% or more. Moreover, from viewpoints of hardness and the moist food texture, the content of the insoluble dietary fiber in the baked confectionery of the present invention is preferably 11.0 mass% or less, more preferably 10.0 mass% or less, more preferably 9.0 mass% or less.

The content of the insoluble dietary fiber can be measured according to the method described in Examples shown later.

The baked confectionery of the present invention contains a specific amount of one kind or two or more kinds of protein. The protein includes protein derived from a raw material such as wheat flour and an egg, protein derived from a preparation containing edible protein such as protein-containing powder describe later, which is used as the raw material, and a combination thereof.

Kinds of protein to be contained in the baked confectionery of the present invention is not particularly limited, and animal-derived protein, vegetable-derived protein or a combination thereof can be blended in. Among them, vegetable-derived protein is preferably blended in.

The above-described animal-derived protein is not particularly limited, and specific examples include one kind or two or more kinds selected from milk-derived protein, whey protein, whey protein concentrate, whey protein isolate, hydrolysate whey peptide, casein protein, egg protein, hen's egg-derived protein, albumen-derived protein, fish-derived protein, shellfish-derived protein, chicken-derived protein, swine-derived protein and bovine-derived protein.

The above-described vegetable-derived protein is not particularly limited, and specific examples include one kind or two or more kinds selected from grain-derived protein, corm-derived protein and algae-derived protein, and grain-derived protein is preferred. Specific examples of the grain-derived protein include one kind or two or more kinds selected from wheat-derived protein, soybean-derived protein, rice-derived protein, adlay-derived protein, oat-derived protein and corn-derived protein. Above all, one kind or two or more kinds selected from wheat-derived protein, soybean-derived protein, adlay-derived protein and oat-derived protein are preferred, and soybean-derived protein is further preferred. Moreover, as the soybean-derived protein, defatted soybean-derived protein is preferred, and defatted soybean-milk-derived protein is further preferred.

The protein content in the baked confectionery of the present invention is from 12.0 to 30.0 mass%. From viewpoints of the stability and the moist food texture, the protein content in the baked confectionery of the present invention is 12.0 mass % or more. Moreover, from viewpoints of the hardness, the packing degree of dough and the moist food texture, the protein content in the baked confectionery of the present invention is preferably 25 mass% or less, more preferably 20.0 mass% or less.

The protein content can be measured according to the method described in Examples shown later.

The baked confectionery of the present invention contains a specific amount of one kind or two or more kinds of lipid. The lipid is mainly derived from fat and oil or the like blended in as the raw material, and is measured according to the method shown in Examples as described later.

A lipid content in the baked confectionery of the present invention is from 10.0 to 15.0 mass%. From viewpoints of the hardness, the moist food texture and the shape stability, the lipid content in the baked confectionery of the present invention is 10.0 mass% or more. Moreover, from viewpoints of the shape stability and the hardness, the lipid content in the baked confectionery of the present invention is preferably 14.0 mass% or less, more preferably 13.0 mass% or less.

The baked confectionery of the present invention preferably contains one kind or two or more kinds of starch. Specific examples of the starch include starch derived from the raw material such as the wheat flour, starch derived from a starch preparation used as the raw material, and a combination thereof. The starch is not particularly limited, and specific examples thereof include one kind or two or more kinds selected from wheat starch, barley starch, rye starch, oats starch, corn starch, rice starch, legumes starch, potato starch, sweet potato starch, tapioca starch, water chestnut starch, chestnut starch, sago starch, yam starch, lotus root starch, arrowhead starch, bracken starch, lily bulb starch and amylomaize starch. The baked confectionery of the present invention preferably contains one kind or two or more kinds selected from wheat starch and corn starch.

A starch content in the baked confectionery of the present invention is not particularly limited, and appropriately adjusted according to an intended purpose. From a viewpoint of melt-in-the-mouth, the starch content in the baked confectionery of the present invention is preferably 10 mass% or more, more preferably 15 mass% or more, more preferably 20 mass% or more. Moreover, from a viewpoint of powderiness, the starch content in the baked confectionery of the present invention is preferably 50 mass% or less, more preferably 40 mass% or less, more preferably 35 mass% or less.

The baked confectionery of the present invention preferably contains a saccharide. The saccharide is not particularly limited, and specific examples of the saccharide include one kind or two or more kinds selected from a monosaccharide, a disaccharide, a trisaccharide, a tetrasaccharide, a pentasaccaride, a hexasaccharide, a starch hydrolysate, and sugar alcohol obtained by reducing these saccharides. More specific examples of the saccharide include one kind or two or more kinds selected from glucose, maltose, fructose, sucrose, lactose, trehalose, maltotriose, maltotetraose, sorbitol, xylitol, erythritol, maltitol, starch syrup, high-fructose corn syrup, invert sugar, cyclodextrin, dextrin and branched cyclodextrin.

A saccharide content in the baked confectionery of the present invention is not particularly limited, and appropriately adjusted according to an intended purpose. The saccharide content in the baked confectionery of the present invention is ordinarily from 0.1 to 50 mass%, and may be from 1.0 to 50 mass%. When the content is adjusted in such a range, flavor, food texture and unity of taste can be further preferable.

The baked confectionery of the present invention may contain a synthetic sweetener. Specific examples of the synthetic sweetener include one kind or two or more kinds selected from sucralose, aspartame, acesulfame potassium and saccharin.

A synthetic sweetener content in the baked confectionery of the present invention is not particularly limited, and appropriately adjusted according to an intended purpose. The synthetic sweetener content in the baked confectionery of the present invention is ordinarily from 0.001 to 1.0 mass%, and may be from 0.005 to 1.0 mass%. When the content is adjusted in such a range, the flavor of the baked confectionery of the present invention can be further clearly developed.

In addition to each ingredient described above, the baked confectionery of the present invention may also contain, in a remainder, various ingredients derived from the raw material that may be blended in during preparation of the dough, or various kinds of ingredients derived from condiments to be added thereto after the dough is baked. As origins of such ingredients, specific examples include one kind or two or more kinds selected from wheat flour, an egg, powder containing insoluble dietary fiber, powder milk, milk, coconut milk, kitchen salt, powder, a condiment, baking powder, a pH adjuster, an antioxidant, a flavoring agent and water.

From a viewpoint of storage stability, a moisture content (water content) in the baked confectionery of the present invention is preferably 20 mass% or less, more preferably 15 mass% or less, more preferably 10 mass% or less. Moreover, from a viewpoint of the food texture, the moisture content in the baked confectionery of the present invention is preferably 3 mass% or more, more preferably 4 mass% or more, more preferably 5 mass% or more. More specifically, the moisture content in the baked confectionery of the present invention is preferably from 3 to 20 mass%, more preferably from 4 to 15 mass%, more preferably from 5 to 10 mass%.

From a viewpoint of the storage stability, water activity in the baked confectionery of the present invention is preferably 0.8 or less, more preferably 0.7 or less, more preferably 0.6 or less.

Even though the baked confectionery of the present invention abundantly contains the insoluble dietary fiber, the baked confectionery of the present invention is hard to cause dry feeling in the mouth and is moist and easily eatable. Moreover, even though the baked confectionery of the present invention abundantly contains the protein, the baked confectionery of the present invention has softer food texture and is easily bitten off. Further, the baked confectionery of the present invention is hard to crumble and excellent in the dough shape stability.

Subsequently, preparation of the baked confectionery of the present invention is described below.

The baked confectionery of the present invention can be obtained by preparing the dough by blending therein, for example, at least the wheat flour, the wheat bran, the protein-containing powder, and the fat and oil, and then baking the dough. Moreover, when necessary, the powder containing the insoluble dietary fiber, other than the wheat bran, can also be blended together with the wheat bran.

The above-described wheat flour is not particularly limited, and any of strong flour, medium-strength flour and weak flour can be used. Among them, weak flour is preferably used.

The above-described "powder containing the insoluble dietary fiber, other than the wheat bran" means powder highly containing the insoluble dietary fiber, and contains the insoluble dietary fiber in an amount of preferably 20 mass% or more, more preferably 30 mass% or more, more preferably 40 mass% or more. The powder containing the insoluble dietary fiber is not particularly limited, and specific examples include one kind or two or more kinds selected from a cellulose preparation, a crystalline cellulose preparation, a methylcellulose preparation, a hemicellulose preparation, a preparation obtained by powdering hulls of cereal seeds other than wheat, soybean pulp left after squeezing soybean milk from a soybean, a preparation obtained by powdering shells of crustacea and a preparation obtained by powdering cell walls of fungi.

The above-described "protein-containing powder" means a powder preparation highly containing edible protein, and contains the protein in an amount of preferably 40 mass% or more, more preferably 50 mass% or more, more preferably 60 mass% or more. Specific examples of commercially available protein-containing powder include soybean protein-containing powder (trade name: Proleena, Soyafit, both manufactured by Fuji Oil Co., Ltd.; Sorubi, Soya Flour, both manufactured by The Nisshin Oillio Group, Ltd.; ALPHA, SUPRO, both manufactured by The Solae Company), whey powder (trade name: Milei 80, manufactured by Milei GmbH), casein powder (trade name: Calcium Caseinate 380, manufactured by Fonterra Co-Operative Group Ltd.), rice protein (trade name: Ripro N80, manufactured by CJ CheilJedang Corporation.), pea protein (trade name : PP-CS, manufactured by Organo Foodtech Corporation).

As the above-described "fat and oil," for example, one kind or two or more kinds selected from vegetable fat and oil, animal fat and oil, emulsified fat and oil and shortening can be used.

Specific examples of the vegetable fat and oil includes one kind or two or more kinds selected from soybean oil, rapeseed oil, corn oil, cotton seed oil, safflower oil, olive oil, palm oil, rice bran oil, sunflower seed oil, sesame oil, and hydrogenated oil thereof, transesterified oil thereof or fractionated oil thereof.

Specific examples of the animal fat and oil includes one kind or two or more kinds selected from lard, bovine fat, fish oil, milk fat, swine fat, horse oil, and hydrogenated oil thereof, transesterified oil thereof or fractionated oil thereof.

Further, specific examples of the emulsified fat and oil includes water-in-oil emulsified fat and oil. Specific examples of the water-in-oil emulsified fat and oil includes one kind or two or more kinds selected from margarine, fat spread and butter. Moreover, when necessary, oil-in-water emulsified fat and oil may be used.

Moreover, one kind or two or more kinds selected from purified or partially purified monoacylglycerol, diacylglycerol and triacylglycerol may be used.

In the preparation of the baked confectionery of the present invention, an amount of each ingredient blended in the dough is not particularly limited, as long as the content of each of the insoluble dietary fiber, the protein and the lipid is within the range specified in the present invention in the baked confectionery obtained by baking the dough,. For example, the amount of each ingredient blended in the dough can be adjusted as described below.

In the preparation of the dough, an amount of the wheat flour blended in the dough is adjusted to be preferably from 25 to 75 parts by mass, more preferably from 30 to 70 parts by mass, with respect to 100 parts by mass of the total amount of the wheat flour, the wheat bran, the protein-containing powder, and the fat and oil blended in the dough.

In the preparation of the dough, an amount of the wheat bran blended in the dough is adjusted to be preferably from 6 to 26 parts by mass, more preferably from 8 to 25 parts by mass, with respect to 100 parts by mass of the total amount of the wheat flour, the wheat bran, the protein-containing powder, and the fat and oil blended in the dough.

In the preparation of the dough, an amount of the protein-containing powder blended in the dough is adjusted to be preferably from 6 to 45 parts by mass, more preferably from 8 to 40 parts by mass, with respect to 100 parts by mass of the total amount of the wheat flour, the wheat bran, the protein-containing powder, and the fat and oil blended in the dough.

In the preparation of the dough, an amount of the fat and oil blended in the dough is adjusted to be preferably from 5 to 25 parts by mass, more preferably from 7 to 20 parts by mass, with respect to 100 parts by mass of the total amount of the wheat flour, the wheat bran, the protein-containing powder, and the fat and oil blended in the dough.

In the preparation of the baked confectionery of the present invention, the egg may be blended in. The egg is not particularly limited, and a hen's egg, an ostrich's egg, a duck's egg or the like can be used. Among them, a hen's egg is preferably used. The above-described egg means egg white, egg york or a combination thereof.

A form of processing the egg to be used is not particularly limited. For example, one kind or two or more kinds selected from a raw egg, a frozen egg, a powdered egg, a sugar-added egg, and a pasteurized egg can be used. Among them, a pasteurized egg is preferably used.

In the preparation of the dough, an amount of the egg blended in the dough is adjusted to be preferably from 5 to 20 parts by mass, more preferably from 7 to 15 parts by mass, with respect to 100 parts by mass of the total amount of the wheat flour, the wheat bran, the protein-containing powder, and the fat and oil blended in the dough.

In the preparation of the baked confectionery of the present invention, the saccharide or the sweetener may be blended in the dough. As the saccharide and sweetener, ones described above in the baked confectionery of the present invention can be used.

A total amount of the saccharide and the sweetener blended in the dough is adjusted to be preferably from 5 to 50 parts by mass, more preferably from 10 to 45 parts by mass, with respect to 100 parts by mass of the total amount of the wheat flour, the wheat bran, the protein-containing powder, and the fat and oil blended in the dough.

In the preparation of the baked confectionery of the present invention, starch (more specifically, a starch preparation) other than the starch that is inevitably incorporated in the dough by blending in the wheat flour may be blended in the dough. Specific examples of the starch preparation include one kind or two or more kinds selected from wheat starch, barley starch, rye starch, oats starch, corn starch, rice starch, legumes starch, potato starch, sweet potato starch, tapioca starch, water chestnut starch, chestnut starch, sago starch, yam starch, lotus root starch, arrowhead starch, bracken starch, lily bulb starch and amylomaize starch. Among them, one kind or two or more kinds selected from wheat starch and corn starch are preferably blended in.

When the starch preparation is blended in, an amount of the starch preparation blended in the dough is adjusted to be preferably from1 to 5 parts by mass, more preferably from 2 to 4 parts by mass, with respect to 100 parts by mass of the total amount of the wheat flour, the wheat bran, the protein-containing powder, and the fat and oil blended in the dough.

In the preparation of the baked confectionery of the present invention, for example, one kind or two or more kinds selected from milk powder, milk, coconut milk, maple syrup, almond powder, various condiments, baking powder, a pH adjuster, an antioxidant, a flavoring agent, kitchen salt and water may be blended in the dough.

In the preparation of the dough of the baked confectionery of the present invention, an ordinary method such as a sugar batter method and a flour batter method can be employed. Moreover, such a method can also be employed as hard biscuit cutting, soft biscuit cutting (embossing), biscuit rotary cutting, biscuit wire cutting, biscuit route press, biscuit depositing (drops) and hand-made biscuit.

The baked confectionery of the present invention is obtained by baking the dough prepared as described above. The baked confectionery of the present invention can be obtained by baking the dough described above. Baking conditions are not particularly limited, and can be appropriately determined according to types of baked confectionery.

With regard to the above-mentioned embodiment, the present invention discloses the baked confectionery or the method of producing the same as shown below.
<1> Baked confectionery, containing:
   insoluble dietary fiber in an amount of from 4.0 to 12.0 mass%;
   protein in an amount of from 10.0 to 30.0 mass%; and
   lipid in an amount of from 8.0 to 15.0 mass%;
   wherein the insoluble dietary fiber includes wheat-bran-derived insoluble dietary fiber.
<2> The baked confectionery according to the item <1>, wherein, when the insoluble dietary fiber includes insoluble dietary fiber other than the wheat-bran-derived insoluble dietary fiber, the insoluble dietary fiber other than the wheat-bran-derived insoluble dietary fiber is preferably derived from one kind or two or more kinds selected from grains other than wheat, legumes, fruits, green goods, shells of crustacea, and cell walls of fungi.
<3> The baked confectionery according to the item <1> or <2>, wherein a ratio of the wheat-bran-derived insoluble dietary fiber in the insoluble dietary fiber is preferably 30.0 mass% or more, more preferably 40.0 mass% or more, more preferably 45.0 mass% or more.
<4> The baked confectionery according to any one of the items <1> to <3>, wherein a ratio of the wheat-bran-derived insoluble dietary fiber in the insoluble dietary fiber is preferably from 95.0 mass% or less, more preferably from 90.0 mass% or less, more preferably from 80 mass% or less.
<5> The baked confectionery according to the item <1> or <2>, wherein a ratio of the wheat-bran-derived insoluble dietary fiber in the insoluble dietary fiber is preferably from 30.0 to 95.0 mass%, more preferably from 40.0 to 90.0 mass%, more preferably from 45.0 to 80.0 mass%.
<6> The baked confectionery according to any one of the items <1> to <5>, wherein a content of the insoluble dietary fiber is preferably 4.5 mass% or more, more preferably 5.0 mass% or more, more preferably 5.5 mass% or more, more preferably 6.0 mass% or more.
<7> The baked confectionery according to any one of the items <1> to <6>, wherein a content of the insoluble dietary fiber is preferably 11.0 mass% or less, more preferably 10.0 mass% or less, more preferably 9.0 mass% or less.
<8> The baked confectionery according to any one of the items <1> to <5>, wherein a content of the insoluble dietary fiber is preferably from 4.5 to 11.0 mass%, more preferably from 5.0 to 11.0 mass%, more preferably from 5.5 to 11.0 mass%, more preferably from 6.0 to 11.0 mass%, more preferably from 6.0 to 10.0 mass%, more preferably from 6.0 to 9.0 mass%.
<9> The baked confectionery according to any one of the items <1> to <8>, wherein the protein preferably contains one kind or two or more kinds selected from vegetable-derived protein and animal-derived protein, more preferably contains one kind or two or more kinds of vegetable-derived protein.
<10> The baked confectionery according to the item <9>, wherein the animal-derived protein is preferably one kind or two or more kinds selected from milk-derived protein, whey protein, whey protein concentrate, whey protein isolate, hydrolysate whey peptide, casein protein, egg protein, hen's egg-derived protein, albumen-derived protein, fish-derived protein, shellfish-derived protein, chicken-derived protein, swine-derived protein and bovine-derived protein.
<11> The baked confectionery according to the item <9> or <10>, wherein the vegetable-derived protein is preferably one kind or two or more kind selected from grain-derived protein, corm-derived protein and algae-derived protein, more preferably grain-derived protein.
<12> The baked confectionery according to the item <11>, wherein the grain-derived protein is preferably one kind or two or more kinds selected from wheat-derived protein, soybean-derived protein, rice-derived protein, adlay-derived protein, oat-derived protein and corn-derived protein, more preferably one kind or two or more kinds selected from wheat-derived protein, soybean-derived protein, adlay-derived protein and oat-derived protein, more preferably soybean-derived protein, more preferably defatted-soybean-derived protein, more preferably defatted-soybean-milk-derived protein.
<13> The baked confectionery according to any one of the items <1> to <12>, wherein a protein content is preferably 11.0 mass% or more, more preferably 12.0 mass% or more.
<14> The baked confectionery according to any one of the items <1> to <13>, wherein a protein content is preferably 25.0 mass% or less, more preferably 20.0 mass% or less.
<15> The baked confectionery according to any one of the items <1> to <12>, wherein a protein content is preferably from 11.0 to 25.0 mass%, more preferably from 12.0 to 20.0 mass%.
<16> The baked confectionery according to any one of the items <1> to <15>, wherein a lipid content is preferably 8.5 mass% or more, more preferably 9.0 mass% or more, more preferably 10.0 mass% or more.
<17> The baked confectionery according to any one of the items <1> to <16>, wherein a lipid content is preferably 14.0 mass% or less, more preferably 13.0 mass% or less.
<18> The baked confectionery according to any one of the items <1> to <15>, wherein a lipid content is preferably from 8.5 to 14.0 mass%, more preferably from 9.0 to 13.0 mass%, more preferably from 10.0 to 13.0 mass%.
<19> The baked confectionery according to any one of the items <1> to <18>, wherein the baked confectionery preferably contains starch.
<20> The baked confectionery according to the item <19>, wherein a starch content is preferably 10 mass% or more, more preferably 15 mass% or more, more preferably 20 mass% or more.
<21> The baked confectionery according to the item <19>, wherein a starch content is preferably 50 mass% or less, more preferably 40 mass% or less, more preferably 35 mass% or less.
<22> The baked confectionery according to any one of the items <19> to <21>, wherein the starch is preferably one kind or two or more kinds selected from wheat starch, barley starch, rye starch, oats starch, corn starch, rice starch, legumes starch, potato starch, sweet potato starch, tapioca starch, water chestnut starch, chestnut starch, sago starch, yam starch, lotus root starch, arrowhead starch, bracken starch, lily bulb starch and amylomaize starch, more preferably one kind or two or more kinds selected from wheat starch, barley starch, rye starch, oats starch and corn starch, more preferably one kind or two or more kinds selected from wheat starch and corn starch.
<23> The baked confectionery according to any one of the items <1> to <22>, wherein the baked confectionery preferably contains a saccharide.
<24> The baked confectionery according to the item <23>, wherein the saccharide is preferably one kind or two or more kinds selected from a monosaccharide, a disaccharide, a trisaccharide, a tetrasaccharide, a pentasaccaride, a hexasaccharide, a starch hydrolysate, and sugar alcohol obtained by reducing these saccharides, more specifically, one kind or two or more kinds selected from glucose, maltose, fructose, sucrose, lactose, trehalose, maltotriose, maltotetraose, sorbitol, xylitol, erythritol, maltitol, starch syrup, high-fructose corn syrup, invert sugar, cyclodextrin, dextrin and branched cyclodextrin.
<25> The baked confectionery according to the item <23> or <24>, wherein a saccharide content is preferably from 0.1 to 50 mass%, more preferably 1.0 to 50 mass%.
<26> The baked confectionery according to any one of the items <1> to <25>, wherein the baked confectionery contains a synthetic sweetener.
<27> The baked confectionery according to the item <26>, wherein the synthetic sweetener is one kind or two or more kinds selected from sucralose, aspartame, acesulfame potassium and saccharin.
<28> The baked confectionery according to the item <26> or <27>, wherein a synthetic sweetener content is preferably from 0.001 to 1.0 mass%, more preferably from 0.005 to 1.0 mass%.
<29> The baked confectionery according to any one of the items <1> to <28>, wherein a moisture content in the baked confectionery is preferably 20 mass% or less, more preferably 15 mass% or less, more preferably 10 mass% or less.
<30> The baked confectionery according to any one of the items <1> to <29>, wherein the moisture content in the baked confectionery is preferably 3 mass% or more, more preferably 4 mass% or more, more preferably 5 mass% or more.
<31> The baked confectionery according to any one of the items <1> to <28>, wherein the moisture content in the baked confectionery is preferably from 3 to 20 mass%, more preferably from 4 to 15 mass%, more preferably from 5 to 10 mass%.
<32> The baked confectionery according to any one of the items <1> to <31>, wherein the backed confectionery is obtained by preparing dough by blending therein at least wheat flour, wheat bran, protein-containing powder, and fat and oil, and then baking the dough, or a method of producing the baked confectionery according to any one of the items <1> to <31>, including preparing dough by blending therein at least wheat flour, wheat bran, protein-containing powder, and fat and oil, and then baking the dough.
<33> The baked confectionery or the method of producing the baked confectionery according to the item <32>, wherein the dough is prepared by further blending powder containing insoluble dietary fiber other than wheat bran.
<34> The baked confectionery or the method of producing the baked confectionery according to the item <33>, wherein the powder containing insoluble dietary fiber other than the wheat bran is preferably one kind or two or more kinds selected from a cellulose preparation, a crystalline cellulose preparation, a methylcellulose preparation, a hemicellulose preparation, a preparation obtained by powdering hulls of cereal seeds other than wheat, soybean pulp left after squeezing soybean milk from a soybean, a preparation obtained by powdering shells of crustacea and a preparation obtained by powdering cell walls of fungi.
<35> The baked confectionery or the method of producing the baked confectionery according to any one of the items <32> to <34>, wherein the wheat flour is preferably one kind or two or more kinds selected from strong flour, medium-strength flour and weak flour, more preferably weak flour.
<36> The baked confectionery or the method of producing the baked confectionery according to any one of the items <32> to <35>, wherein the protein-containing powder preferably contains protein in an amount of 40 mass% or more, more preferably 50 mass% or more, more preferably 60 mass% or more.
<37> The baked confectionery or the method of producing the baked confectionery according to any one of the items <32> to <36>, wherein the protein-containing powder is preferably one kind or two or more kinds selected from soybean protein-containing powder, whey powder, casein powder, rice protein, and pea protein, more preferably soybean protein-containing powder.
<38> The baked confectionery or the method of producing the baked confectionery according to any one of the items <32> to <37>, wherein the fat and oil is preferably one kind or two or more kinds selected from vegetable fat and oil, animal fat and oil, emulsified fat and oil, and shortening.
<39> The baked confectionery or the method of producing the baked confectionery according to the item <38>, wherein the vegetable fat and oil is preferably one kind or two or more kinds selected from soybean oil, rapeseed oil, corn oil, cotton seed oil, safflower oil, olive oil, palm oil, rice bran oil, sunflower seed oil, sesame oil, and a hydrogenated oil thereof, a transesterified oil thereof or a fractionated oil thereof.
<40> The baked confectionery or the method of producing the baked confectionery according to the item <38>, wherein the animal oil is preferably one kind or two or more kinds selected from lard, bovine fat, fish oil, milk fat, swine fat, horse oil, and a hydrogenated oil thereof, a transesterified oil thereof or a fractionated oil thereof.
<41> The baked confectionery or the method of producing the baked confectionery according to any one of the items <38> to <40>, wherein the emulsified fat and oil is preferably a water-in-oil emulsified fat and oil, more specifically, one kind or two or more kinds selected from margarine, fat spread and butter.
<42> The baked confectionery or the method of producing the baked confectionery according to any one of the items <32> to <41>, wherein an egg is blended in, or the dough is prepared by blending the egg.
<43> The baked confectionery or the method of producing the baked confectionery according to any one of the items <32> to <42>, wherein one kind or two or more kinds of saccharide and sweetener are blended in, or the dough is prepared by blending one kind or two or more kinds of saccharide and sweetener therein.
<44> The baked confectionery or the method of producing the baked confectionery according to any one of the items <32> to <43>, wherein starch is blended in, or the dough is prepared by blending a starch preparation therein.
<45> The baked confectionery or the method of producing the baked confectionery according to any one of the items <32> to <44>, wherein, in the preparation of the dough, an amount of the wheat flour blended in the dough is preferably from 25 to 75 parts by mass, more preferably from 30 to 70 parts by mass, with respect to 100 parts by mass of the total amount of the wheat flour, the wheat bran, the protein-containing powder, and the fat and oil blended in the dough.
<46> The baked confectionery or the method of producing the baked confectionery according to any one of the items <32> to <45>, wherein, in the preparation of the dough, an amount of the wheat bran blended in the dough is preferably from 6 to 26 parts by mass, more preferably from 8 to 25 parts by mass, with respect to 100 parts by mass of the total amount of the wheat flour, the wheat bran, the protein-containing powder, and the fat and oil blended in the dough.
<47> The baked confectionery or the method of producing the baked confectionery according to any one of the items <32> to <46>, wherein, in the preparation of the dough, an amount of the protein-containing powder blended in the dough is preferably from 6 to 45 parts by mass, more preferably from 8 to 40 parts by mass, with respect to 100 parts by mass of the total amount of the wheat flour, the wheat bran, the protein-containing powder, and the fat and oil blended in the dough.
<48> The baked confectionery or the method of producing the baked confectionery according to any one of the items <32> to <47>, wherein, in the preparation of the dough, an amount of the fat and oil blended in the dough is preferably from 5 to 25 parts by mass, more preferably from 7 to 20 parts by mass, with respect to 100 parts by mass of the total amount of the wheat flour, the wheat bran, the protein-containing powder, and the fat and oil blended in the dough.
<49> The baked confectionery or the method of producing the baked confectionery according to any one of the items <42> to <48>, wherein, in the preparation of the dough, an amount of the egg blended in the dough is preferably from 5 to 20 parts by mass, more preferably from 7 to 15 parts by mass, with respect to 100 parts by mass of the total amount of the wheat flour, the wheat bran, the protein-containing powder, and the fat and oil blended in the dough.
<50> The baked confectionery or the method of producing the baked confectionery according to any one of the items <43> to <49>, wherein, in the preparation of the dough, a total amount of the saccharide and the sweetener blended in the dough is preferably from 5 to 50 parts by mass,, more preferably from 10 to 45 parts by mass, with respect to 100 parts by mass of the total amount of the wheat flour, the wheat bran, the protein-containing powder and the fat and oil blended in the dough.
<51> The baked confectionery or the method of producing the baked confectionery according to any one of the items <44> to <50>, wherein, in the preparation of the dough, an amount of the starch preparation is preferably from 1 to 5 parts by mass, more preferably from 2 to 4 parts by mass, with respect to 100 parts by mass of the total amount of the wheat flour, the wheat bran, the protein-containing powder, and the fat and oil blended in the dough.
<52> The baked confectionery or the method of producing the baked confectionery according to any one of the items <32> to <51>, wherein the dough is prepared by a sugar batter method, a flour batter method, hard biscuit cutting, soft biscuit cutting (embossing), biscuit rotary cutting, biscuit wire cutting, biscuit route press, biscuit depositing (drops), or hand-made biscuit.
<53> The baked confectionery according to any one of the items <1> to <30>, or the baked confectionery or the method of producing the baked confectionery according to any one of the items <32> to <52>, wherein the baked confectionery is preferably a biscuit, a cookie, a cracker, a hard biscuit, a pretzel, a pie, cut bread or shortbread, more preferably a biscuit, a cookie, a hard biscuit, a pretzel, a pie or cut bread.

### Examples

The present invention will be described in more detail based on the following examples, but the invention is not intended to be limited thereto.

### [Measurement of insoluble dietary fiber]

An amount of insoluble dietary fiber was measured by the modified Prosky method described in AOAC Method 991.42. Specifically the amount was measured by the following method.

A sample was processed using a homogenizer, and then sieved using a 10-mesh sieve to obtain powder having a particle size of 2 mm or less. Then, 125 mL of petroleum ether was added to 5 g of a powder sample, and the resultant mixture was allowed to stand for 15 minutes while the mixture was occasionally stirred, and then centrifuged (2150 G, 10 minutes), and a supernatant was poured into a glass filter G-3. Further, similar operation was repeated twice, and finally a total amount was poured into the glass filter, a residue was air-dried, and then the resultant defatted sample was weighed. Then, 1 g of defatted sample was collected into a 500 mL-volume tall beaker, and then, 50 mL of 0.08 M phosphate buffer solution having pH of 6.0, and 0.1 mL of thermostable α-amylase (trade name: Termacyl 120L, manufactured by NovoZymes A/S) were added thereto. The resultant mixture was allowed to stand in a water bath at 95°C for 30 minutes while the mixture was shaken at an interval of 5 minutes, and allowed to cool for 10 minutes at room temperature, and then 0.275 M sodium hydroxide solution was added thereto and adjusted to pH 7.5. Then, 0.1 mL of protease (manufactured by Sigma-Aldrich Corporation) solution adjusted to be a concentration of 50 mg/mL by dissolving the protease into 0.08 M phosphate buffer solution adjusted to pH 6.0 was added thereto. Activity of the added protease was 500 U/mL. Then, the resultant mixture was shaken at 60°C for 30 minutes, allowed to cool at room temperature for 10 minutes, and then adjusted to pH 4.3 using 0.325 M hydrochloric acid. Then, 0.1 mL of amyloglucosidase (trade name: Amyloglucosidase solution from Aspergillus niger, manufactured by Sigma-Aldrich Corporation) was added thereto, and the resultant mixture was shaken at 60°C for 30 minutes. Filtration was made using a crucible type glass 2G2, a product obtained by drying a residue at 105°C overnight was weighed, and taken as an amount of insoluble dietary fiber. A content of the insoluble dietary fiber in a baked confectionery was calculated based on thus obtained amount of insoluble dietary fiber.

### [Measurement of protein]

Measurement of protein was carried out according to a Kjeldahl method. Specifically, the measurement was carried out by the following method.

A sample in an amount of 0.5 to 1 g was accurately weighed, and put into a decomposition flask. Then, 3 g of contact agent and 20 mL of concentrated sulfuric acid were gradually added thereto and the sample was thermally decomposed. A liquid in the decomposition flask became transparent and blue by copper sulfate was developed, and then heating was further continued for about 1 hour. After the liquid was cooled, water in an amount of 2 to 3 times the liquid was gradually added thereto and diluted. After the diluted decomposition liquid was sufficiently cooled, the liquid was put into 100 mL-volume measuring flask, and distilled by a Kjeldahl distillation apparatus. After distillation, the Erlenmeyer flask was removed, and titration was conducted using a 0.1 N NaOH standard solution. A value obtained by multiplying 6.25 times a nitrogen amount determined from a value obtained by titration was taken as a protein content.

### [Measurement of lipid]

An analysis of a lipid content was conducted according to a Soxhlet extraction method. Specifically, the analysis was conducted by the following method.

A sample in an amount of 10 g was accurately weighed, and put into an extraction thimble. The extraction thimble was placed inside a Soxhlet extraction tube, and 100 mL of diethyl ether (guaranteed reagent: Wako Pure Chemical Industries, Ltd.) was put in the extraction tube, and the sample was subjected to extraction for 8 hours while the tube was warmed at 50°C in a hot bath. The resultant extract was put into a rotary evaporator to distill diethyl ether, and then the weight of the residue was measured, and taken as a lipid content.

### [Production Example] Production of baked confectionery

Each ingredient was mixed according to a blending amount (unit: parts by mass) described in Table 1 below to prepare dough, and baked confectionery of Examples 1 to 13 and Comparative Examples 1 to 6 were produced by baking the dough. A specific production method is described in detail below.

In HOBART mixer N50 MIXER manufactured by HOBART GmbH, margarine (trade name: Cherica Gold E(A), manufactured by Kao Corporation), reduced sugar syrup (trade name: Sweet OL, manufactured by B Food Science Co., Ltd.), sucralose (manufactured by San-Ei Gen F.F.I., Inc.), ammonium carbonate (manufactured by Wako Pure Chemical Industries, Ltd.) as baking powder, sodium bicarbonate (manufactured by Wako Pure Chemical Industries, Ltd.), and kitchen salt (manufactured by The Salt Industry Center of Japan) were weighed and put therein, and the resultant mixture was mixed at a low speed for 30 seconds, and then mixed at a medium speed.

Further, while the resultant mixture was stirred at a low speed for 30 seconds, whole hen's egg beaten was added thereto in 3 parts. After a first part of beaten egg was added thereto, the resultant mixture was stirred at a low speed for 30 seconds, and subsequently, a second part of beaten egg was added thereto, and the resultant mixture was stirred at a low speed for 30 seconds. After oil adhered to a wall of the mixer was scraped off, a remaining egg was added thereto, and the resultant mixture was stirred at a low speed for 30 seconds, and further stirred at a medium speed for 1 minute until a uniform cream state was formed.

Subsequently, wheat flour (trade name: Violet, manufactured by Nisshin Flour Milling Inc.), soybean protein-containing powder (derived from defatted soybean milk, trade name: Proleena 700, manufactured by Fuji Oil Co., Ltd.), casein powder (trade name: Calcium Caseinate 380, manufactured by Fonterra Co-operative Group Limited), whey powder (trade name: Milei 80, manufactured by Milei GmbH), corn starch (manufactured by Nihon Shokuhin Kako Co., Ltd.) were mixed according to blending amounts described in Table 1 below, and the resultant mixture was stirred at a low speed for 45 seconds.

Finally, wheat bran (trade name: Wheat Bran DF, manufactured by Nisshin Pharma Inc.) was mixed according to a blending amount described in Table 1 below, and the resultant mixture was stirred at a low speed for 45 seconds.

The dough obtained as described above was packed into rectangular baking pans and set them in line on a top plate on which a release paper was placed. As the baking pan, one made of metal and having a dimension of vertical × horizontal × height: 70 mm × 20 mm × 15 mm was used.

Subsequently, baking was performed under the following baking conditions.
Baking temperature: upper flame 180°C/lower flame 180°C
Baking time: 12 minutes
Moisture contents in all of the baked confectionery after being baked were within the range of 4 to 7 mass%.

With regard to baked confectionery after elapse of one day at room temperature from baking, contents (unit: mass%) of insoluble dietary fiber, protein and lipid were measured by above-mentioned methods. The results are shown in Table 1 below.

Moreover, the following test was conducted using the baked confectionery after elapse of one day at room temperature from baking.

### [Test Example 1]

With regard to the baked confectionery produced in the above-described Production Example, hardness upon biting the confectionery, packing condition (packing degree) of dough, moist food texture sensed in the mouth, and shape stability (disintegrability) were evaluated based on the following evaluation criteria. Each evaluation was conducted by a panel of three experts.

### - Evaluation criteria of hardness -

5 : Bitten off very easily, resists crumbling, and minimal crumb scattering.
4 : Bitten off easily, resists crumbling, and minimal crumb scattering.
3 : Bitten off rather easily, resists crumbling, and minimal crumb scattering.
2 : Hard and not easy to bite off, or brittle and easily crumbled.
1 : Very hard and difficult to bite off, or too brittle and very easily crumbled.

### - Packing condition of dough -

5 : Packing degree of dough significantly loose, and food texture very soft.
4 : Packing degree of dough relatively loose, and food texture soft.
3 : Packing degree of dough somewhat loose, and food texture somewhat soft.
2 : Dough lumpy and somewhat thickly packed, and food texture hard.
1 : Dough lumpy and thickly packed, and food texture very hard.

### - Moist food texture -

5 : Very little feeling of saliva absorption, and no dry feeling in the mouth.
4 : Little feeling of saliva absorption, and almost no dry feeling in the mouth.
3 : Some dry feeling in the mouth.
2 : Strong feeling of saliva absorption, and dry feeling in the mouth.
1 : Very strong feeling of saliva absorption, and difficult to eat due to dry feeling in the mouth.

### - Dough shape stability -

5 : Greatly improved dough strength makes for good shape-keeping.
4 : Signigicantly improved dough strength makes for good shape-keeping.
3 : Somewhat improved dough strength makes for good shape-keeping.
2 : Somewhat weak dough strength causes poor shape-keeping.
1 : Very weak dough strength causes total lack of shape-keeping.

Dough shape stability was evaluated based on forming properties (degree of shapelessness) and degree of dough cracking after kneading, forming and standing for 30 minutes at room temperature.

The results are shown in Table 1 below (test example 10 for illustrative purposes only). An evaluation of "hard and not easy to bite off" or "very hard and difficult to bite off" in the evaluation criteria of hardness and an evaluation of "somewhat weak dough strength causes poor shape-keeping" or "very weak dough strength causes total lack of shape-keeping" in the evaluation criteria of dough shape stability can be compatible. More specifically, "hardness" in the evaluation of hardness means the food texture associated with mastication when baked confectionery are eaten and a feeling when the confectionery is broken. "Dough strength" in the evaluation of dough shape stability means shape retainability of dough or connection in the dough. Therefore, the baked confectionery having hardness in physical properties and low dough strength may be produced depending on the ingredient composition of the baked confectionery.

**Table 1**

| | | Examples | | | | | | |
|---|---|---|---|---|---|---|---|---|
| | | 1 | 2 | 3 | 4 | 5 | 6 | 7 |
| Raw materials | Wheat flour | 37.97 | 36.92 | 34.09 | 45.01 | 43.75 | 40.34 | 25.97 |
| | Soybean protein | 15.19 | 14.77 | 13.64 | 7.40 | 7.19 | 6.63 | 25.97 |
| | Casein | - | - | - | - | - | - | - |
| | Whey | - | - | - | - | - | - | - |
| | Margarine | 7.28 | 7.08 | 6.53 | 7.40 | 7.19 | 6.63 | 7.47 |
| | Corn starch | 1.58 | 1.54 | 1.42 | 1.61 | 1.56 | 1.44 | 1.62 |
| | Reduced sugar syrup | 25.31 | 24.61 | 22.73 | 25.72 | 25.00 | 23.05 | 25.97 |
| | Whole egg | 6.33 | 6.15 | 5.68 | 6.43 | 6.25 | 5.76 | 6.49 |
| | Cooking salt | 0.32 | 0.31 | 0.28 | 0.32 | 0.31 | 0.29 | 0.32 |
| | Sucralose | 0.01 | 0.01 | 0.01 | 0.01 | 0.01 | 0.01 | 0.01 |
| | Ammonium carbonate | 0.22 | 0.22 | 0.20 | 0.23 | 0.22 | 0.20 | 0.23 |
| | Sodium bicarbonate | 0.09 | 0.09 | 0.09 | 0.10 | 0.09 | 0.09 | 0.10 |
| | Wheat bran | 5.70 | 8.31 | 15.34 | 5.79 | 8.44 | 15.56 | 5.84 |
| | Total | 100.00 | 100.00 | 100.00 | 100.00 | 100.00 | 100.00 | 100.00 |
| Content of insoluble dietary fiber (after baking) | | 5.00% | 6.40% | 10.20% | 4.90% | 6.20% | 9.80% | 5.30% |
| Content of protein (after baking) | | 18.60% | 18.80% | 19.10% | 12.60% | 12.80% | 13.30% | 26.90% |
| Content of lipid (after baking) | | 10.28% | 10.45% | 10.94% | 10.28% | 10.87% | 11.36% | 10.18% |
| Evaluation result | Hardness | 4 | 5 | 4 | 4 | 5 | 4 | 3 |
| | Packing in dough | 4 | 5 | 5 | 3 | 5 | 5 | 4 |
| | Moist texture | 4 | 4 | 5 | 4 | 5 | 5 | 5 |
| | Shape stability (disintegrability) | 3 | 5 | 5 | 3 | 4 | 5 | 4 |

| 8 | 9 | 10 | 11 | 12 | | | 13 | |
|---|---|---|---|---|---|---|---|---|
| Raw materials | Wheat flour | 25.24 | 23.25 | 39.86 | 36.59 | 37.98 | 36.91 | |
| | Soybean protein | 25.24 | 23.25 | 9.97 | 10.37 | - | - | |
| | Casein | - | - | - | - | 12.34 | - | |
| | Whey | - | - | - | - | - | 14.77 | |
| | Margarine | 7.26 | 6.69 | 5.65 | 12.19 | 7.28 | 7.08 | |
| | Corn starch | 1.58 | 1.45 | 1.66 | 1.52 | 1.58 | 1.54 | |
| | Reduced sugar syrup | 25.24 | 23.25 | 26.58 | 24.39 | 25.31 | 24.61 | |
| | Whole egg | 6.31 | 5.81 | 6.64 | 6.10 | 6.33 | 6.15 | |
| | Cooking salt | 0.32 | 0.29 | 0.33 | 0.30 | 0.32 | 0.31 | |
| | Sucralose | 0.01 | 0.01 | 0.01 | 0.01 | 0.01 | 0.01 | |
| | Ammonium carbonate | 0.22 | 0.20 | 0.23 | 0.21 | 0.22 | 0.22 | |
| | Sodium bicarbonate | 0.09 | 0.09 | 0.10 | 0.09 | 0.09 | 0.09 | |
| | Wheat bran | 8.52 | 15.70 | 8.97 | 8.23 | 8.54 | 8.31 | |
| | Total | 100.00 | 100.00 | 100.00 | 100.00 | 100.00 | 100.00 | |
| Content of insoluble dietary fiber (after baking) | | 6.70% | 10.50% | 6.40% | 6.40% | 6.40% | 6.40% | |
| Content of protein (after baking) | | 27.00% | 26.40% | 18.80% | 18.80% | 18.80% | 18.80% | |
| Content of lipid (after baking) | | 10.37% | 10.86% | 8.50% | 14.50% | 10.45% | 10.45% | |
| Evaluation result | Hardness | 4 | 4 | 4 | 5 | 3 | 5 | |
| | Packing in dough | 5 | 5 | 4 | 5 | 3 | 5 | |
| | Moist texture | 5 | 5 | 4 | 4 | 4 | 5 | |
| | Shape stability (disintegrability) | 5 | 5 | 5 | 4 | 4 | 4 | |

| | | Comparative Examples | | | | | | |
|---|---|---|---|---|---|---|---|---|
| | | 1 | 2 | 3 | 4 | 5 | 6 | |
| Raw materials | Wheat flour | 39.09 | 31.74 | 18.93 | 47.32 | 41.96 | 33.24 | |
| | Soybean protein | 15.63 | 12.70 | 31.54 | 3.15 | 10.49 | 11.91 | |
| | Casein | - | - | - | - | - | - | |
| | Whey | - | - | - | - | - | - | |
| | Margarine | 7.49 | 6.08 | 7.26 | 7.26 | 0.70 | 17.73 | |
| | Corn starch | 1.63 | 1.32 | 1.58 | 1.58 | 1.75 | 1.38 | |
| | Reduced sugar syrup | 26.06 | 21.16 | 25.24 | 25.24 | 27.97 | 22.16 | |
| | Whole egg | 6.51 | 5.29 | 6.31 | 6.31 | 6.99 | 5.54 | |
| | Cooking salt | 0.33 | 0.26 | 0.32 | 0.32 | 0.35 | 0.28 | |
| | Sucralose | 0.01 | 0.01 | 0.01 | 0.01 | 0.01 | 0.01 | |
| | Ammonium carbonate | 0.23 | 0.19 | 0.22 | 0.22 | 0.24 | 0.19 | |
| | Sodium bicarbonate | 0.10 | 0.08 | 0.09 | 0.09 | 0.10 | 0.08 | |
| | Wheat bran | 2.93 | 21.16 | 8.52 | 8.52 | 9.44 | 7.48 | |
| | Total | 100.00 | 100.00 | 100.00 | 100.00 | 100.00 | 100.00 | |
| Content of insoluble dietary fiber (after baking) | | 3.40% | - | 7.00% | 6.70% | 10.20% | 10.20% | |
| Content of protein (after baking) | | 18.70% | - | 32.20% | 9.80% | 19.10% | 19.10% | |
| Content of lipid (after baking) | | 10.28% | 11.34% | 10.17% | 11.12% | 3.00% | 20.00% | |
| Evaluation result | Hardness | 2 (Hard) | 1 (Brittle) | 1 (Hard) | 2 (Brittle) | 1 (Hard) | 2 (Brittle) | |
| | Packing in dough | 1 | 1 | 1 | 2 | 1 | 5 | |
| | Moist texture | 1 | 1 | 2 | 2 | 1 | 2 | |
| | Shape stability (disintegrability) | 1 | 1 | 2 | 1 | 3 | 2 | |

As shown in Table 1, even when the protein content and the lipid content were within the range specified in the present invention, if the content of the insoluble dietary fiber was lower than the content defined in the present invention, the confectionery was hard and difficult to be bitten off, and also, the food texture was very hard. Moreover, strong dry feeling was sensed in the mouth, and further, the confectionery resulted in poor shape stability (Comparative Example 1). Conversely, if the content of insoluble dietary fiber was increased over the content defined in the present invention, the baked confectionery was brittle and easily crumbled (Comparative Example 2). Although the content of insoluble dietary fiber was not actually measured in the baked confectionery in Comparative Example 2, if the content is calculated from the blended amount of the wheat bran, the content of insoluble dietary fiber therein is obviously higher than the content defined in the present invention.

Moreover, even when the content of insoluble dietary fiber and the lipid content were within the range defined in the present invention, if the protein content was higher than the content defined in the present invention, the confectionery was also hard and difficult to be bitten off, and simultaneously the food texture was very hard. Further, the strong dry feeling was sensed in the mouth and the baked confectionery resulted in the poor shape stability (Comparative Example 3). Conversely, if the protein content was lower than the content defined in the present invention, the baked confectionery was brittle and easily crumbled (Comparative Example 4).

Moreover, even when the content of insoluble dietary fiber and the protein content were within the range defined in the present invention, if the lipid content was lower than the content defined in the present invention, the baked confectionery was hard and difficult to be bitten off, and simultaneously the food texture was very hard. Further, the strong dry feeling was sensed in the mouth and the baked confectionery resulted in the poor shape stability (Comparative Example 5). Conversely, if the lipid content was increased over the content defined in the present invention, the baked confectionery was brittle and easily crumbled (Comparative Example 6).

In contrast, the baked confectionery of Examples 1 to 13 (example 10 not within scope of the claims) gave good results in all evaluation items of the hardness, the packing condition of dough, the moist food texture and the shape stability.

Having described our invention as related to this embodiments, it is our intention that the invention not be limited by any of the details of the description, unless otherwise specified, but rather be construed broadly within its spirit and scope as set out in the accompanying claims.

## Claims

1. Baked confectionery, comprising:
insoluble dietary fiber in an amount of from 4.0 to 12.0 mass%;
protein in an amount of from 12.0 to 30.0 mass% of; and
lipid in an amount of from 10.0 to 15.0 mass%;
wherein the insoluble dietary fiber includes wheat-bran-derived insoluble dietary fiber,
wherein a ratio of the wheat-bran-derived insoluble dietary fiber in the insoluble dietary fiber is 30.0 mass% or more.

2. The baked confectionery according to claim 1, wherein a ratio of the wheat-bran-derived insoluble dietary fiber in the insoluble dietary fiber is from 45.0 to 80.0 mass%.

3. The baked confectionery according to any one of claims 1 to 2, wherein the baked confectionery comprises vegetable-derived protein.

4. The baked confectionery according to claim 3, wherein the baked confectionery comprises grain-derived protein.

5. The baked confectionery according to any one of claims 1 to 4, wherein a content of the insoluble dietary fiber is from 6.0 to 11.0 mass%.

6. The baked confectionery according to any one of claims 1 to 5, wherein a content of the protein is from 12.0 to 25.0 mass%.

7. The baked confectionery according to any one of claims 1 to 5, wherein a content of the lipid is from 10.0 to 14.0 mass%.

8. The baked confectionery according to any one of claims 1 to 7, wherein a moisture content in the baked confectionery is from 3 to 20 mass%.

9. The baked confectionery according to any one of claims 1 to 8, wherein the baked confectionery is a biscuit, a cookie, a cracker, a hard biscuit, a pretzel, a pie, cut bread or shortbread.

10. A method of producing the baked confectionery according to any one of claims 1 to 9, comprising preparing dough by blending therein at least wheat flour, wheat bran, protein-containing powder, and fat and oil, and then baking the dough.

11. The method of producing the baked confectionery according to claim 10, wherein an amount of the wheat flour blended in the dough is preferably from 25 to 75 parts by mass with respect to 100 parts by mass of a total amount of the wheat flour, the wheat bran, the protein-containing powder, and the fat and oil blended in the dough.

12. The method of producing the baked confectionery according to claim 10 or 11, wherein an amount of the wheat bran blended in the dough is from 6 to 26 parts by mass with respect to 100 parts by mass of a total amount of the wheat flour, the wheat bran, the protein-containing powder, and the fat and oil blended in the dough.

13. The method of producing the baked confectionery according to any one of claims 10 to 12, wherein an amount of the protein-containing powder blended in the dough is from 6 to 45 parts by mass with respect to 100 parts by mass of a total amount of the wheat flour, the wheat bran, the protein-containing powder, and the fat and oil blended in the dough.

14. The method of producing the baked confectionery according to any one of claims 10 to 13, wherein an amount of the fat and oil blended in the dough is from 5 to 25 parts by mass with respect to 100 parts by mass of a total amount of the wheat flour, the wheat bran, the protein-containing powder, and the fat and oil blended in the dough.

## Patentansprüche

1. Gebackenes Konfekt, umfassend:
unlöslichen Ballaststoff in einem Gehalt von 4,0 bis 12,0 Masse-%;
Protein in einem Gehalt von 12,0 bis 30,0 Masse-%; und
Lipid in einem Gehalt von 10,0 bis 15,0 Masse-%;
wobei der unlösliche Ballaststoff von Weizenkleie stammenden unlöslichen Ballaststoff umfasst,
wobei der Anteil der von Weizenkleie stammenden unlöslichen Ballaststoffe im unlöslichen Ballaststoff 30,0 Masse-% oder mehr beträgt.

2. Gebackenes Konfekt gemäß Anspruch 1, wobei das Verhältnis des von Weizenkleie stammenden unlöslichen Ballaststoffs im unlöslichen Ballaststoff von 45,0 bis 80,0 Masse-% beträgt.

3. Gebackenes Konfekt gemäß einem der Ansprüche 1 bis 2, wobei das gebackene Konfekt von Pflanzen stammendes Protein umfasst.

4. Gebackenes Konfekt gemäß Anspruch 3, wobei das gebackene Konfekt von Korn stammendes Protein umfasst.

5. Gebackenes Konfekt gemäß einem der Ansprüche 1 bis 4, wobei der Gehalt des unlöslichen Ballaststoffs von 6,0 bis 11,0 Masse-% beträgt.

6. Gebackenes Konfekt gemäß einem der Ansprüche 1 bis 5, wobei der Gehalt des Proteins von 12,0 bis 25,0 Masse-% beträgt.

7. Gebackenes Konfekt gemäß einem der Ansprüche 1 bis 5, wobei der Gehalt des Lipids von 10,0 bis 14,0 Masse-% beträgt.

8. Gebackenes Konfekt gemäß einem der Ansprüche 1 bis 7, wobei der Feuchtigkeitsgehalt in dem gebackenen Konfekt von 3 bis 20 Masse-% beträgt.

9. Gebackenes Konfekt gemäß einem der Ansprüche 1 bis 8, wobei das gebackene Konfekt ein Plätzchen, ein Keks, ein Cracker, ein Hartplätzchen, eine Brezel, ein Pie, Schnittbrot oder Buttergebäck ist.

10. Verfahren zum Herstellen des gebackenen Konfekts gemäß einem der Ansprüche 1 bis 9, umfassend Zubereiten eines Teigs durch Hineinmischen von wenigstens Weizenmehl, Weizenkleie, proteinhaltigem Pulver und Fett und Öl und anschließendes Backen des Teiges.

11. Verfahren zum Herstellen des gebackenen Konfekts gemäß Anspruch 10, wobei der Gehalt des in den Teig hineingemischten Weizenmehls vorzugsweise von 25 bis 75 Masseteile beträgt, bezogen auf 100 Masseteile einer Gesamtmenge des/der in den Teig hineingemischten Weizenmehls, Weizenkleie, proteinhaltigen Pulvers und Fetts und Öls.

12. Verfahren zum Herstellen des gebackenen Konfekts gemäß Anspruch 10 oder 11, wobei der Gehalt der in den Teig hineingemischten Weizenkleie 6 bis 26 Masseteile beträgt, bezogen auf 100 Masseteile einer Gesamtmenge des/der in den Teig hineingemischten Weizenmehls, Weizenkleie, Proteinhaltigen Pulvers und Fette und Öls.

13. Verfahren zum Herstellen des gebackenen Konfekts gemäß einem der Ansprüche 10 bis 12, wobei der Gehalt des in den Teig hineingemischten proteinhaltigen Pulvers von 6 bis 45 Masseteile beträgt, bezogen auf 100 Masseteile einer Gesamtmenge des/der in den Teig hineingemischten Weizenmehls, Weizenkleie, proteinhaltigen Pulvers und Fetts und Öls.

14. Verfahren zum Herstellen des gebackenen Konfekts gemäß einem der Ansprüche 10 bis 13, wobei der Gehalt des in den Teig hineingemischten Fetts und Öls von 5 bis 25 Masseteile beträgt, bezogen auf 100 Masseteile einer Gesamtmenge des/der in den Teig hineingemischten Weizenmehls, Weizenkleie, proteinhaltigen Pulvers und Fetts und Öls.

## Revendications

1. Pâtisserie cuite, comprenant :
des fibres alimentaires insolubles en une quantité de 4,0 à 12,0 % en masse ;
des protéines en une quantité de 12,0 à 30,0 % en masse ; et
des lipides en une quantité de 10,0 à 15,0 % en masse ;
dans laquelle les fibres alimentaires insolubles comprennent des fibres alimentaires insolubles dérivées du son de blé,
dans laquelle une proportion des fibres alimentaires insolubles dérivées du son de blé est de 30,0 % en masse ou plus.

2. Pâtisserie cuite selon la revendication 1, dans laquelle une proportion des fibres alimentaires insolubles dérivées du son de blé dans les fibres alimentaires insolubles est de 45,0 à 80,0 % en masse.

3. Pâtisserie cuite selon l'une quelconque des revendications 1 à 2, dans laquelle la pâtisserie cuite comprend des protéines d'origine végétale.

4. Pâtisserie cuite selon la revendication 3, dans laquelle la pâtisserie cuite comprend des protéines dérivées de grain.

5. Pâtisserie cuite selon l'une quelconque des revendications 1 à 4, dans laquelle une teneur des fibres alimentaires insolubles est de 6,0 à 11,0 % en masse.

6. Pâtisserie cuite selon l'une quelconque des revendications 1 à 5, dans laquelle une teneur des protéines est de 12,0 à 25,0 % en masse.

7. Pâtisserie cuite selon l'une quelconque des revendications 1 à 5, dans laquelle une teneur des lipides est de 10,0 à 14,0 % en masse.

8. Pâtisserie cuite selon l'une quelconque des revendications 1 à 7, dans laquelle une teneur en humidité dans la pâtisserie cuite est de 3 à 20 % en masse.

9. Pâtisserie cuite selon l'une quelconque des revendications 1 à 8, dans laquelle la pâtisserie cuite est un biscuit, un cookie, un cracker, un biscuit dur, un bretzel, une tarte, du pain coupé ou un sablé.

10. Procédé de production de la pâtisserie cuite selon l'une quelconque des revendications 1 à 9, comprenant la préparation d'une pâte en y mélangeant au moins une farine de blé, du son de blé, une poudre contenant des protéines, et une graisse et une huile, et ensuite la cuisson de la pâte.

11. Procédé de production de la pâtisserie cuite selon la revendication 10, dans lequel une quantité de la farine de blé mélangée dans la pâte est de préférence de 25 à 75 parties en masse par rapport à 100 parties en masse d'une quantité totale de la farine de blé, du son de blé, de la poudre contenant des protéines, et de la graisse et de l'huile mélangés dans la pâte.

12. Procédé de production de la pâtisserie cuite selon la revendication 10 ou 11, dans lequel une quantité du son de blé mélangée dans la pâte est de 6 à 26 parties en masse par rapport à 100 parties en masse d'une quantité totale de la farine de blé, du son de blé, de la poudre contenant des protéines, et de la graisse et de l'huile mélangés dans la pâte.

13. Procédé de production de la pâtisserie cuite selon l'une quelconque des revendications 10 à 12, dans lequel une quantité de la poudre contenant des protéines mélangée dans la pâte est de 6 à 45 parties en masse par rapport à 100 parties en masse d'une quantité totale de la farine de blé, du son de blé, de la poudre contenant des protéines, et de la graisse et de l'huile mélangés dans la pâte.

14. Procédé de production de la pâtisserie cuite selon l'une quelconque des revendications 10 à 13, dans lequel une quantité de la graisse et de l'huile mélangée dans la pâte est de 5 à 25 parties en masse par rapport à 100 parties en masse d'une quantité totale de la farine de blé, du son de blé, de la poudre contenant des protéines, et de la graisse et de l'huile mélangés dans la pâte.
